# EUROPÄISCHE PATENTANMELDUNG

(11) **EP 2 613 061 A2**
(43) Veröffentlichungstag der Anmeldung: **10.07.2013**
(21) Anmeldenummer: 13150701.4
(22) Anmeldetag: 09.01.2013
(51) Int. Cl.: F16B 13/06, F16J 13/12, F16L 55/13, F16L 55/136

(54) **Verschlusseinrichtung zum Verschließen einer hydraulischen und/oder pneumatischen Bohrung**

(30) Priorität: 09.01.2012 DE 102012100120
(71) Anmelder: Scanwill ApS, 2620 Albertslund (DK)
(72) Erfinder: Iversen, Jesper Will, 6400 Sonderborg (DK)
(74) Vertreter: Misselhorn, Hein-Martin

(57) **Zusammenfassung**

Die Erfindung betrifft eine Verschlusseinrichtung (100a) zum Verschließen einer hydraulischen und/oder pneumatischen Bohrung, mit einem hülsenartigen Dichtelement (110a), das in die zu verschließende Bohrung eingesetzt wird und das sich durch Verformung dichtend an die Innenwandung der Bohrung anlegt, und mit einem Verformungselement (120a), das längsbeweglich im Innenraum (111a) des Dichtelements (110a) angeordnet ist und das aus wenigstens einer Montageposition in wenigstens eine Verschlussposition bewegbar ist und hierbei die Verformung des Dichtelements (110a) herbeiführt, wobei die Verschlusseinrichtung (100a) ferner einen Dreh-Stell Mechanismus umfasst, mit dem eine extern aufgebrachte Drehbewegung in eine Längsbewegung des Verformungselements (120a) umsetzbar ist, um dieses aus der Montageposition in die Verschlussposition zu bewegen.

## Beschreibung

Die Erfindung betrifft eine Verschlusseinrichtung zum Verschließen einer hydraulischen und/oder pneumatischen Bohrung gemäß der im Oberbegriff des Anspruchs 1 näher angegebenen Art. Die Erfindung betrifft ferner auch einen Bausatz für eine solche Verschlusseinrichtung

Eine Verschlusseinrichtung der betreffenden Art ist aus der DE 10 2007 027 004 A1 bekannt. Die vorbekannte Verschlusseinrichtung umfasst ein hülsenartiges Dichtelement (Verschluss), das in die zu verschließende Bohrung eingesetzt wird und das sich durch plastische Verformung (radiales Aufweiten) dichtend an die Innenwandung der Bohrung anlegt. Die vorbekannte Verschlusseinrichtung umfasst ferner ein Verformungselement (Expansionsorgan), das längsbeweglich im Innenraum des hülsenar tigen Dichtelements angeordnet ist und das aus wenigstens einer Montageposition in wenigstens eine Verschlussposition bewegbar ist und hierbei die Verformung des hülsenartigen Dichtelements herbeiführt. Das Verformungselement ist kugelförmig ausgebildet. Aus der DE 698 19 226 T2 ist eine ähnliche Verschlusseinrichtung mit einem kegelstumpfförmigen Verformungs element bekannt

Sowohl bei der aus der DE 10 2007 027 004 A1 vorbekannten Verschlusseinrichtung als auch bei der aus der DE 698 19 226 T2 vorbekannten Verschlusseinrichtung wird die plastische Verformung des hülsenartigen Dichtelements durch Einpressen oder ge gebenenfalls auch Einschlagen des Verformungselements herbeigeführt.

Eine Aufgabe der Erfindung ist es eine Verschlusseinrichtung der eingangs genanten Art anzugeben, die sich einfach montieren lässt.

Diese Aufgabe wird gelöst mit einer erfindungsgemäßen Verschlusseinrichtung gemäß den Merkmalen des Anspruchs 1. Die vom Anspruch 1 abhängigen Ansprüche beziehen sich auf vorteilhafte Ausgestaltungen und Weiterbildungen, wobei die Rückbezüge der abhängigen Ansprüche nicht zwingend sind. Mit einem nebengeordneten Anspruch erstreckt sich die Lösung der Aufgabe auch auf einen Bausatz für eine erfindungsgemäße Verschlusseinrichtung. Mit einem weiteren nebengeordneten Anspruch erstreckt sich die Lösung der Aufgabe ferner auch auf eine bevorzugte Verwendung der erfindungsgemäßen Verschlusseinrichtung. Mit einem weiteren nebengeordneten Anspruch erstreckt sich die Lösung der Aufgabe auch auf einen druckdichten Verschluss. Die vorausgehenden und/oder nachfolgenden Erläuterungen gelten analog für alle Erfindungsgegenstände

Die erfindungsgemäße Verschlusseinrichtung umfasst ein hülsenartiges Dichtelement (Dichthülse), welches in die zu verschließende Bohrung eingesetzt wird und welches sich durch Verformung dichtend an die Innenwandung der Bohrung anlegt, und ein Verformungselement (Expansionselement), welches verschieblich bzw. längsbeweglich im Innenraum bzw. in einer Innenbohrung des Dichtelements angeordnet ist und welches (durch Verschieben bzw. axiales Längsbewegen) aus wenigstens einer Montageposition in wenigstens eine Verschlussposition bewegbar bzw. verbringbar ist und hierbei die Verformung des Dichtelements herbeiführt. Die erfindungsgemäße Verschlusseinrichtung umfasst ferner einen Dreh-Stell-Mechanismus mit dem eine extern bzw. von außen aufgebrachte Drehbewegung in eine Längsbewegung des Verformungselements umsetzbar ist, um dieses aus der wenigstens einen Montageposition in die wenigstens eine Verschlussposition zu bewegen bzw. zu verbringen.

Unter einer Hülse oder einem hülsenartigen Element wird ein Rohr oder Röhrchen mit einer axialen Längserstreckung verstanden, das eine zumindest annährend zylindrische Wandung aufweist, die bevorzugt an einer Stirnseite durch einen Boden verschlossen ist und an der gegenüberliegenden Stirnseite offen ist. Über die offene Stirnseite ist der Innenraum bzw. die Innenbohrung zugänglich, um bspw. das Verformungselement einkönnen.

Das Verformungselement kann bezüglich des hülsenartigen Dicht elements mehrere Montagepositionen und/oder Verschlusspositionen aufweisen. Hierbei kann es sich um freie oder um definierte Positionen handeln. Eine definierte Position kann bspw. durch Anschläge, Rastelement und dergleichen baulich vorgegeben sein

Bei der Verformung handelt es sich insbesondere um eine plas tische Verformung des Hülsenmaterials, wie nachfolgend noch näher erläutert. Die plastische Verformung kann auch elastische Verformungsanteile enthalten. Der elastische Verformungs anteil ergibt sich aus dem Verformungsgrad und aus den Materialeigenschaften. Gegebenenfalls kann auch eine ausschließlich elastische Verformung vorliegen.

Unter einem Dreh-Stell-Mechanismus (Verstellmechanismus) wird die Gesamtheit mehrerer zusammenwirkender bzw. miteinander korrespordierender Komponenten verstanden, die in einer ausschließlich mechanischen Weise die Umsetzung einer von außen aufgebrachten Drehbewegung in eine Längsbewegung des Verformungselements bewirken. Hierbei wird auch das aufgebrachte Drehmoment definiert in eine Vorschubkraft umgesetzt. Konkrete Ausgestaltungen eines Dreh-Stell-Mechanismus sind Gegenstand bevorzugter Weiterbildungen und werden im Folgenden näher erläutert

Die erfindungsgemäße Verschlusseinrichtung ermöglicht zuverlässig ein dichtes Verschließen von hydraulischen und/oder pneumatischen Bohrungen. Die erfindungsgemäße Verschlussvorrichtung kann Drücken von bis zu mehreren Hundert bar standhalten und ist somit auch im Hochdruckbereich verwendbar.

Der Dreh-Stell-Mechanismus erlaubt eine sehr einfache Montage und insbesondere eine sehr einfache Handhabung des eigentlichen Abdichtvorgangs nach dem Einsetzen der Verschlusseinrichtung in die zu verschließende Bohrung. Ein hydraulisches Werkzeug, wie in der DE 10 2007 027 004 A1 beschrieben, ist hierfür nicht erforderlich. Gegebenenfalls kann die erforderliche Drehkraft mit einem einfachen Handwerkzeug (Drehmomentschlüssel, Gabelschlüssel, Schraubendreher, Bohrmaschine, Akkuschrauber und dergleichen) aufgebracht werden

Ein weiterer Vorteil ist darin zu sehen, dass die Montage der erfindungsgemäßen Verschlusseinrichtung bzw. dass das Ver schließen einer Bohrung mit der erfindungsgemäßen Verschlusseinrichtung, insbesondere im Vergleich zum Einschlagen oder Einpressen, sehr gut automatisierbar ist. Die für den Abdichtvorgang erforderliche Drehbewegung kann bspw. von einer zweckentsprechenden Maschine aufgebracht werden, wobei die von die ser Maschine erzeugte Drehbewegung mittels Reibschluss oder Formschluss (wie nachfolgend noch näher erläutert) auf die erfindungsgemäße Verschlusseinrichtung übertragbar ist. Mit einer Drehwinkelsteuerung kann erreicht werden, dass das Verformungselement stets in dieselbe Verschlussposition bewegt wird, so dass die Verschlusseinrichtung quasi immer gleich fest in der zu verschließenden Bohrung einsitzt. Selbiges könnte gegebenenfalls auch mit einer Drehmomentsteuerung erreicht werden. Durch eine Drehmomentüberwachung kann erreicht werden, dass die herbeigeführte Verformung im Rahmen einer Vorgabe liegt und somit Beschädigungen ausgeschlossen werden. Eine Drehmomentüberwachung kann im Übringen auch bei manueller Montage mittels eines Drehmomentschlüssels oder dergleichen realisiert werden.

Bevorzugt ist vorgesehen, dass die erfindungsgemäße Verschlusseinrichtung als vormontierte Montageeinheit bereitgestellt wird, wobei sich das Verformungselement bevorzugt in einer Montageposition befindet. Alternativ kann die erfindungsgemäße Verschlusseinrichtung auch als Bausatz (Kit) bereitgestellt werden, wobei das hülsenartige Dichtelement, das Verformungselement und/oder weitere Elemente vereinzelt bereitgestellt werden und vor der Montage zunächst zusammengefügt werden müssen.

Der Dreh-Stell-Mechanismus kann ein Schraubmechanismus sein, der zwei ineinandergreifende Gewindeabschnitte umfasst. Bei den Gewindeabschnitten handelt es sich bevorzugt um ein Außengewinde und um ein Innengewinde, die als korrespondierende Bewegungsgewinde und/oder als Kraftübersetzungsgewinde zusammenwirken. Bevorzugt ist vorgesehen, dass das Bewegungsgewinde bzw. Kraftübersetzungsgewinde als Feingewinde (hierunter wird insbesondere ein Gewinde mit niedriger Gewindesteigung verstanden) ausgebildet ist um eine sehr genaue und feinfühlige Montage zu ermöglichen

Gemäß iner bevorzugten Weiterbildung ist vorgesehen, dass einer der zum Schraubmechanismus gehörenden Gewindeabschnitte ein am hülsenartigen Dichtelement angeordnetes Innengewinde ist Das Innengewinde kann direkt in die Innenwandung des hülsenartigen Dichtelements eingeformt sein. Ferner ist bevorzugt vorgesehen, dass der andere Gewindeabschnitt ein am Verformungselement angeordnetes Außengewinde ist. Das Außengewinde kann direkt an einer Außenumfangsfläche des Verformungselements angeformt sein. Der durch das Innengewinde am hülsenartigen Dichtelement und das Außengewinde am Verformungselement gebildete Schraubmechanismus bewirkt unmittelbar eine Längsbewegung des Verformungselements relativ zum hülsenartigen Dichtelement. Durch Verdrehen des Verformungselements relativ zum hülsenartigen Dichtelement kann dieses, ausgehend von seiner Montageposition, in das hülsenartige Dichtelement eingedreht werden, was mit einer axialen Längsbewegung einhergeht und was die Verformung des hülsenartigen Dichtelements herbeiführt. Die Längsbewegung des Verformungselements und die Verformung des hülsenartigen Dichtelements sind abgeschlossen, wenn das Verformungselement seine Verschlussposition erreicht bzw. eingenommen hat.

Das zu einem solchen Schraubmechanismus gehörende Verformungs element kann einen Formschlussabschnitt aufweisen an dem zum Aufbringen einer Drehbewegung bzw. eines Drehmoments ein Drehwerkzeug oder dergleichen angesetzt werden kann. Ein solcher Formschlussabschnitt kann z. B. als Kreuzschlitzkerbung, als Innenmehrkantfläche (bspw. Innensechskant), als Außenmehrkantfläche oder dergleichen ausgebildet sein. Der Formschlussabschnitt ist insbesondere derart ausgebildet, dass das Drehwerkzeug in axialer Richtung aufgesetzt bzw. aufgesteckt und anschließend in entgegengesetzter axialer Richtung wieder abgezogen werden kann.

Das Verformungselement kann zu diesem Zweck als massiver vorzugsweise auch einstückiger, und insbesondere langgestreckter Körper ausgebildet sein, der an einem axialen Ende bzw. an der vorderen Stirnseite mit einem Kopf und am anderen axialen Ende bzw. an der hinteren Stirnseite mit dem Formschlussabschnitt ausgebildet ist. Der Kopf kann kugelförmig (oder kugelsegmentförmig), paraboloidförmig oder kegelstumpfförmig ausgebildet sein.

Gemäß einer anderen bevorzugten Weiterbildung ist vorgesehen, dass die Verschlusseinrichtung ferner ein Schraubelement zum Bewegen des Verformungselements aufweist, wobei der andere Gewindeabschnitt ein an diesem Schraubelement angeordnetes Außengewinde ist. Das Außengewinde kann direkt an einer Außenumfangsfläche des Schraubelements angeformt sein. Der durch das Innengewinde am hülsenartigen Dichtelement und das Außengewinde am Schraubelement gebildete Schraubmechanismus bewirkt mittelbar eine Längsbewegung des Verformungselements relativ zum hülsenartigen Dichtelement. Durch Verdrehen des Schraubelements relativ zum hülsenartigen Dichtelement wird dieses, ausgehend von einer Ausgangsposition, in das hülsenartige Dichtelement eingedreht und schiebt hierbei das Verformungselement quasi vor sich her, was die Verformung des hülsenartigen Dichtelements herbeiführt. Die Längsbewegung des Verformungselements und die Verformung des hülsenartigen Dichtelements sind abgeschlossen, wenn das Schraubelement eine Endposition erreicht hat und/oder wenn das Verformungselement seine Verschlussposition erreicht bzw. eingenommen hat. Das derart mittels Schraubelement bewegte Verformungselement kann kugelför mig, paraboloidförmig oder kegelstumpfförmig ausgebildet sein Das Schraubelement kann einen Formschlussabschnitt aufweisen, an dem zum Aufbringen einer Drehbewegung bzw. eines Drehmo ments ein Drehwerkzeug oder dergleichen angesetzt werden kann. Hierfür gelten analog die obenstehenden Erläuterungen. Zu diesem Zweck kann das Schraubelement als massiver, vorzugsweise auch einstückiger, und insbesondere langgestreckter Körper ausgebildet sein, der an einem axialen Ende bzw. an der vorderen Stirnseite mit einem Kontaktabschnitt für das Verformungs element und am anderen axialen Ende bzw. an der gegenüberliegenden hinteren Stirnseite mit dem Formschlussabschnitt ausgebildet ist. Der Kontaktabschnitt kann z. B. als Kontaktfläche, Kontaktkuppe oder dergleichen ausgebildet sein. Je nach Ausbildung des Kontaktabschnitts ergibt sich eine Flächenberührung, eine Linienberührung und/oder eine Punktberührung zwischen dem Schraubelement bzw. dessen Kotaktabschnitt und dem Verformungselement.

Das Verformungselement kann sich beim Eindrehen des Schraubelements mitdrehen. Bevorzugt ist jedoch vorgesehen, dass sich das Verformungselement beim Eindrehen des Schraubelements nicht mitdreht, dass also eine Entkopplung der Drehbewegung gegeben ist, was bspw. durch eine Längsführung des Verformungselements oder gegebenenfalls auch nur durch die Reibung des Verformungselements an der Innenwandung des Innenraums des hülsenartigen Dichtelements bewerkstelligt werden kann.

Das Schraubelement kann als Madenschraube ausgebildet sein Unter einer Madenschraube wird eine vorzugsweise kleine Schraube bzw. ein kleiner Gewindestift ohne Schraubenkopf verstanden. Diese kopflose Schraube weist an ihrer hinteren Stirnseite einen Formschlussabschnitt, wie bspw. einen Schraubendreherschlitz oder einen Innensechskant auf (wie vorausgehende erläutert), und kann gegebenenfalls vollständig in das hülsenartige Dichtelement eingedreht werden. Auch das voraus gehend erläuterte Verformungselement mit einem Formschlussabschnitt kann als Madenschraube ausgebildet sein.

Im Rahmen der Erfindung können die Merkmale der vorausgehend erläuterten Weiterbildungen frei und unabhängig von den erläuterten Merkmalskombinationen miteinander kombiniert werden

Das senartige Dichtelement und das Verformungselement können aus einem Metallmaterial und insbesondere aus einem Eisen- oder Stahlmaterial gebildet sein. Ferner ist bevorzugt vorgesehen, dass das Verformungselement aus einem härteren Metallmaterial als das hülsenartige Dichtelement besteht, damit sich das Verformungselement beim Bewegen in die Verschlussposition nicht verformt, sondern das hülsenartige Dichtelement. Auch das Schraubelement kann aus einem Metallmaterial und insbesondere aus einem Stahlmaterial gebildet sein. Bevorzugt sind das hülsenartige Dichtelement, das Verformungselement und/oder das Schraubelement einteilig und einstückig ausgebildet.

Die erfindungsgemäße Verschlusseinrichtung kann wenigstens ei ne Kontrolleinrichtung aufweisen, die (visuell) anzeigt, ob sich das Verformungselement in einer Verschlussposition und/oder das Schraubelement in einer Endposition befindet. Eine solche Kontrolleinrichtung kann z. B. eine Farbmarkierung sein (bspw. in grüner oder roter Farbe die an der Innenwandung des Innenraums des hülsenartigen Dichtelements angebracht ist und die dann sichtbar wird, wenn das Verformungselement oder das Schaubelement weit genug in das hülsenartige Dichtelement eingedreht ist. Die Kontrolleinrichtung ist insbesondere derart ausgebildet, dass diese automatisiert erfasst werden kann. Bspw. können Farbmarkierungen einer Kamera automatisch erfasst werden.

Bevorzugt ist vorgesehen dass das hülsenartige Dichtelement der erfindungsgemäßen Verschlusseinrichtung an seiner Außenumfangsfläche zumindest abschnittsweise eine Riffelung aufweist. Diese Riffelung ist insbesondere in die Außenwandung einge formt. Die Riffelung kann z. B. durch eine Vielzahl axial beabstandeter umlaufender Zahnringe gebildet sein, die im Querschnitt dreieckförmig, rechteckförmig, trapezförmig und/oder verrundet ausgebildet sind. Die Riffelung kann sich beim Verformen des hülsenartigen Dichtelements in die Innenwandung der zu verschließenden Bohrung eindrücken, wodurch in vorteilhafter Weise ein Formschluss zwischen der erfindungsgemäßen Ver schlusseinrichtung und dem Werkstück herbeigeführt wird vorzugt weist das Metallmaterial (oder gegebenenfalls auch Kunststoffmaterial) des hülsenartigen Dichtelements eine größere Härte als das Material des Werkstücks auf, um einen solchen durch plastische Vorformung der Innenwandung der zu verschließenden Bohrung herbeigeführten Formschluss zu ermöglichen.

Die erfindungsgemäße Verschlusseinrichtung kann derart ausgebildet sein, dass das hülsenartige Dichtelement zum Einsetzen in eine gerade Bohrung vorgesehen ist und diese Bohrung in radialer Richtung abdichtet. Bevorzugt weist das zu dieser Verschlusseirrichtung gehörende hülsenartige Dichtelement eine zylindrische Außenform auf. Beim Abdichten wird das hülsenartige Dichtelement im Wesentlichen in radialer Richtung verformt (radiales Aufweiten) und dichtet dann in radialer Richtung gegen die Innenwandung der zu verschließenden Bohrung ab

Eine erfindungsgemäße Verschlusseinrichtung kann jedoch auch derart ausgebildet sein, dass das hülsenartige Dichtelement zum Einsetzen in eine gestufte Bohrung vorgesehen ist und diese Bohrung in radialer Richtung und/oder in axialer Richtung abdichtet. Bevorzugt weist das zu dieser Verschlusseinrichtung gehörende hülsenartige Dichtelement eine zylindrische Außenform auf. Die vordere geschlossene Stirnseite dieses Dichtelements ist insbesondere konisch oder mit einer Fase ausgebildet ist, die dafür vorgesehen ist, in axialer Richtung gegen die Stufe bzw. gegen den Absatz der gestuften Bohrung abzudichten. D. h. beim Abdichten kann das hülsenartige Dichtele ment in radialer Richtung (radiales Aufweiten) und gegen die Stufe auch in axialer Richtung verformt werden und dichtet dann sowohl in radialer Richtung gegen die Innenwandung als auch in axialer Richtung gegen die Stufe der zu verschließenden Bohrung ab

Bevorzugt ist vorgesehen, dass der Innenraum des zu dieser Verschlusseinrichtung gehörenden hülsenartigen Dichtelements in axialer Richtung und bezüglich der offenen Stirnseite zumindest bis zur Bohrungsstufe und insbesondere über die Bohrungsstufe hinausragt, so dass das Verschlusselement wenigstens bis zu dieser Stufe oder sogar darüber hinaus in eine Verschlussposition bewegt werden kann. Dadurch kann auch im Bereich der Stufe der zu verschließenden Bohrung eine sehr gute Verformung des hülsenartigen Dichtelements herbeigeführt werden. Im Übrigen gelten für diese Verschlusseinrichtung ana log die vorausgehenden und/oder nachfolgenden Erläuterungen

Die erfindungsgemäße Verschlusseinrichtung wird vorzugsweise zum Verschließen einer hydraulischen und/oder pneumatischen Bohrung verwendet, wobei deren Dreh-Stell-Mechanismus drehwinkelgesteuert und/oder drehmomentgesteuert betätigt wird, was manuell oder maschinell erfolgen kann.

Weitere Ausgestaltungen und Weiterbildungen, sowie Merkmale und Vorteile der Erfindung ergeben sich in nicht einschränkender Weise aus der nachfolgenden Beschreibung mehrerer Ausführungsbeispiele mit Bezug auf die schematischen Schnitt ichnungen. Im Rahmen der Erfindung können die Merkmale dieser Ausführungsbeispiele beliebig und unabhängig von den gezeigten und/oder erläuterten Merkmalskombinationen miteinander kombi niert werden.

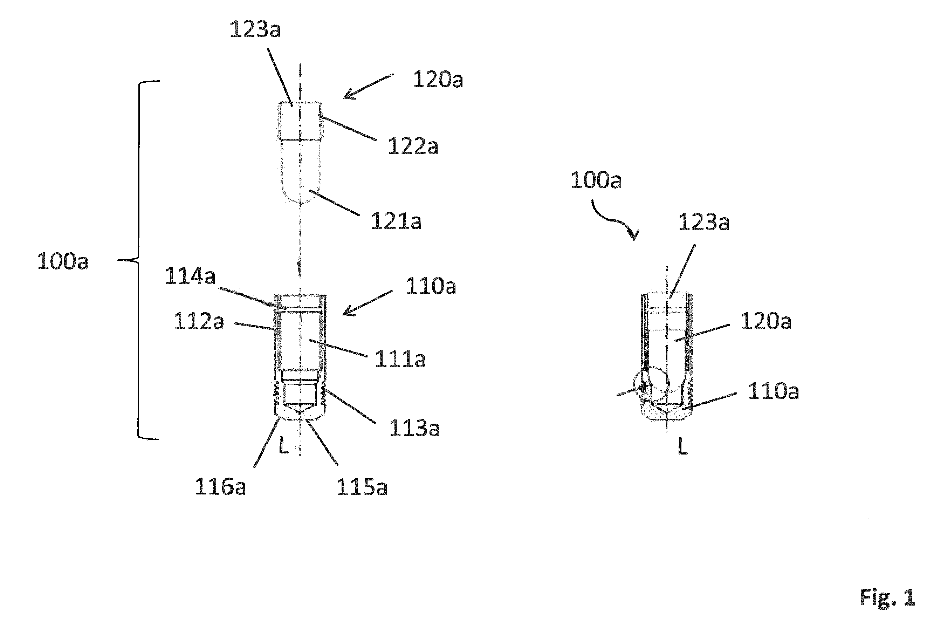

- Fig. 1: zeigt in zwei Einzeldarstellungen ein erstes Ausführungsbeispiel einer Verschlusseinrichtung.
- Fig 2: zeigt in mehreren Einzeldarstellungen die Montage der Verschlusseinrichtung gemäß dem ersten Ausführungsbeispiel.

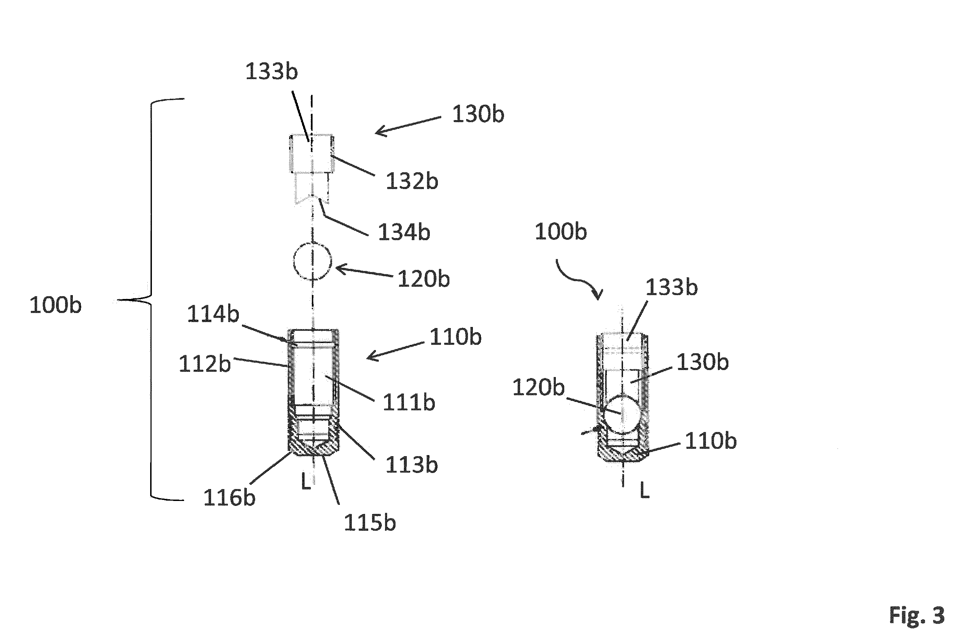

- Fig 3: zeigt in zwei Einzeldarstellungen ein zweites Ausführungsbeispiel einer Verschlusseinrichtung.
- Fig 4: zeigt in zwei Einzeldarstellungen ein drittes Ausfüh rungsbeispiel einer Verschlusseinrichtung.
- Fig 5: zeigt in mehreren Einzeldarstellungen die Montage der Verschlusseinrichtung gemäß dem dritten Ausführungs beispiel.
- Fig. 6: zeigt in mehreren Einzeldarstellungen die Montage einer Verschlusseinrichtung gemäß einem vierten Ausführungsbeispiel
- Fig. 7: zeigt in drei Einzeldarstellungen drei weitere Ausführungsbeispiele einer Verschlusseinrichtung.
- Fig. 8: zeigt in zwei Einzeldarstellungen ein siebtes Ausführungsbeispiel einer Verschlus inrichtung.
- Fig. 9: zeigt in mehreren Einzeldarstellungen die Montage der Verschlusseinrichtung gemäß dem siebten Ausführungsbeispiel.

In den Figuren sind gleiche und/oder funktionsgleiche Komponenten mit den selben Bezugszeichen benannt. Zur besseren Unterscheidung der Ausführungsbeispiele sind diesen Bezugszeichen jedoch die Buchstabe a bis h angehängt. Die nachfolgend verwendeten Richtungsangaben beziehen sich in nicht einschränkender Weise auf die in den Figuren gezeigten Darstellungen.

Fig. zeigt eine insgesamt mit 100a bezeichnete Verschlusseinrichtung zum Verschließen einer hydraulischen und/oder pneumatischen Bohrung an einem Werkstück. Die Verschlusseinrichtung 100a umfasst in hülsenartiges Dichtelement 110a und ein Verformungselement 120a. Das Dichtelement 110a und das Verformungselement 120a sind einteilig und einstückig aus ei nem Metallmaterial oder gegebenenfalls auch aus einem Kunst stoffmaterial (insbesondere einem weichen Kunststoffmaterial) hergestellt. Die Längsachse ist mit L angegeben. Die radiale Richtung erstreckt sich senkrecht zu dieser Längsachse L.

Das hülsenartige Dichtelement 110a weist einen von einer geschlossenen Wandung umgebenen Innenraum bzw. eine Innenbohrung 111a auf, die an der untern Stirnseite durch einen Boden 115a verschlossen und an der gegenüberliegenden Stirnseite offen ist. D. h. der Innenraum 111a ist über die offene Stirnseite zugänglich. In dem sich von der offenen Stirnseite wegerstreckenden zylindrischen Abschnitt des Innenraums 111a ist die Innenwandung mit einem eingeformten Innengewinde 112a ausgebildet. Dem zylindrischen Abschnitt mit dem Innengewinde 112a schließt sich nach unten ein verengter Abschnitt mit einem verkleinerten Querschnitt und einer größeren Wanddicke an. Im Bereich dieses verengten Abschnitts ist die Außenwandung bzw. die Außenumfangsfläche mit einer eingeformten Riffelung 113a ausgebildet, die mehrere axial beabstandete umlaufende Zahnringe umfasst. Die Zahnringe können im Querschnitt widerhakenähnlich ausgebildet sein, wobei z. B. die vorderen Zahnflanken (dies sind die der geschlossenen Stirnseite 115a zugewandten Zahnflanken) steiler als die hinteren Zahnflanken geformt sind. Falls das hülsenartige Dichtelement 110a aus einem Metallmaterial besteht, so kann dieses optional speziell im Be reich dieser Riffelung 113a gehärtet sein. Mit 114a ist ein an der Innenwandung angeordneter Farbring oder Materialring bezeichnet, der als visuelle Kontrolleinrichtung fungiert, wie nachfolgend noch näher erläutert.

Das Verformungselement 120a ist als massiver langgestreckter Körper ausgebildet, der an seinem vorderen axialen Ende einen abgerundeten bzw. kugelsegmentförmigen Kopf 121a und am anderen axialen Ende bzw. an der hinteren Stirnseite mit einem Formschlussabschnitt 123a ausgebildet st. In dem vom Kopf 121a abgewandten hinteren Bereich ist an der Außenumfangsflä che ein eingeformtes Außengewinde 122a angeordnet.

Die linke Darstellung igt das Dichtelement 110a und das Verformungselement 120a in einem vereinzelten Zustand. Die rechte Darstellung zeigt das Dichtelement 110a und das Verformungselement 120a in einem vormontierten Zustand, wobei das Verformungselement 120a entlang der mit L angegebenen gemeinsamen Längsachse mit seinem Kopf 121a voraus in den Innenraum 111a des hülsenartigen Dichtelements 110a eingesetzt und eingedreht ist, so dass das Außengewinde 122a und das Innengewinde 112a ineinandergreifen Das Verformungselement 120a befindet sich bezüglich des Dichtelements 110a in einer Ausgangs- bzw. Montageposition.

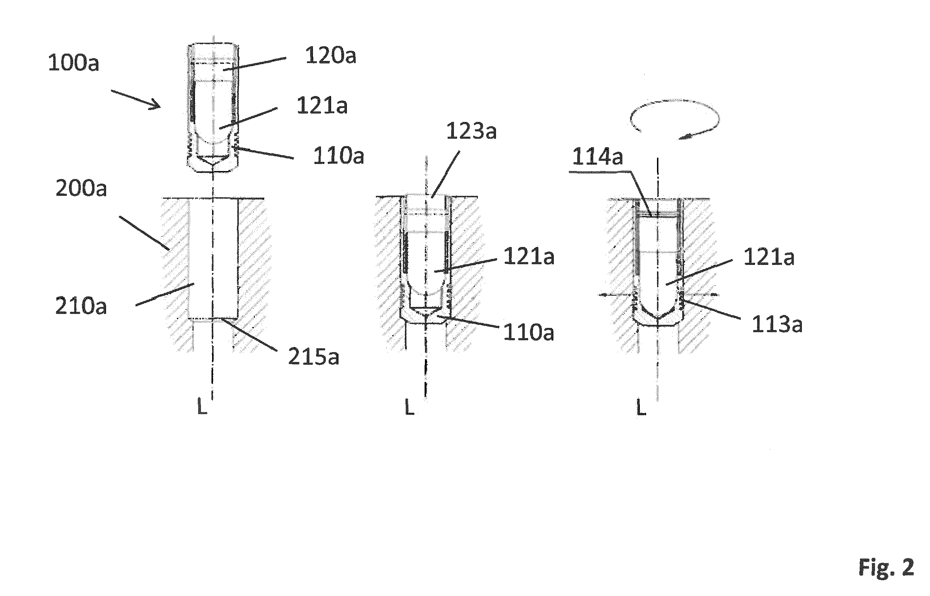

Anhand der Fig. 2 wird nachfolgend die Montage der vormontierten Verschlusseinrichtung 100a an einem Werkstück 200a erläutert. Die Montage umfasst im Wesentlichen zwei Schritte: das Einsetzen in die zu verschließende Bohrung 210a und den eigentlichen Abdichtvorgang, was durch Eindrehen des Verformungselements 120a in das hülsenartige Dichtelement 110a er folgt (hierbei entspricht die Drehachse der Längsachse L). Die linke Darstellung zeigt den Einsetzvorgang, wobei das Einsetzen in axialer Richtung (L) erfolgt. Die mittlere Darstellung zeigt die in die zu verschließende Bohrung 210a eingesetzte Verschlusseinrichtung 100a, wobei die Verschlusseinrichtung 100a gegebenenfalls durch elastische Federkräfte in der Bohrung 210a festgehalten wird, was die Montage vereinfachen kann (bspw. bei Überkopfmontage). Das Verformungselement 120a befindet sich noch in der Montageposition.

Ausgehend von dem in der mittleren Darstellung gezeigten Zustand wird nun das Verschlusselement 120a durch externes Aufbringen einer Drehbewegung relativ zum Dichtelement 110a verdreht, was aufgrund der ineinandergreifenden Gewinde bzw. Gewindeabschnitte 112a und 122a unmittelbar eine axiale Längsbewegung des Verformungselements 120a in den Innenraum 111a des Dichtelements 110a bewirkt. Hierbei wird das Verformungseiement 120a aus der Montageposition in die in der rechten Darstellung gezeigte Verschlussposition bzw. Endposition bewegt und dann durch Reib- und/oder Formschluss in dieser Verschlussposition gehalten. Bei dieser axialen Bewegung des Verformungselements 120a relativ zum Dichtelement 110a dringt dessen Kopf 121a in den verengten Abschnitt des Innenraums 111a vor (wobei der zunehmende Querschnitt des Kopfs 121a größer ist als der Querschnitt des verengten Abschnitts), was eine radiale Aufweitung der Dichthülse bzw. des Dichtelements 110a herbeiführt und sich diese dichtend an die Innenwandung der zu verschließenden Bohrung 210a anlegt. Gleichzeitig drückt sich die Riffelung 113a in die Innenwandung der zu verschließenden Bohrung 210a ein (so genanntes Verkrallen), was einen zumindest in axialer Richtung wirkenden Formschluss zwischen der Verschlusseinrichtung 100a und dem Werkstück 200a herbeiführt. Diesen Zustand zeigt die rechte Darstellung. Bevorzugt ist vorgesehen, dass sich die in der Regel härteren Zähne der Riffelung 113a in das weichere Material der Bohrungs innenwandung eindrücken und diese hierbei elastisch und/oder plastisch verformen ohne selbst verformt zu werden. Besonders bevorzugt ist jedoch vorgesehen, dass die Zähne der Riffelung 113a nicht gehärtet sind und sich somit plastisch verformen und hierbei eine beabsichtigte Dichtwirkung entfalten können.

Das Eindrehen des Verformungselements 120a ist beendet, wenn keine weitere Verformung des Dichtelements 110a und/oder keine weitere axiale Bewegung des Verformungselements 120a mehr möglich ist. Die Verschlusseinrichtung 100a verfügt ferner über einen Farbring 114a, der an der Innenwandung des Dichtelements 110a angeordnet ist und der freigegeben bzw. sichtbar wird, wenn das Verformungselement 120a weit genug eingedreht ist und sich in seiner Verschlussposition befindet. Der Farbring 114a zeigt somit den erfolgreichen Abdichtvorgang an. Damit der Farbring 114a freigelegt werden kann ist das Verformungselement 120a als kopflose Madenschraube ausgebildet. Dadurch aber ist das Verformungselement 120a auch vollständig in das Dichtelement 110a eindrehbar und steht somit in der Verschlussposition nicht mehr über.

Die Drehbewegung bzw. das Drehmoment wird mittels eines Werkzeugs aufgebracht, dass hierfür in den Formschlussabschnitt 123a an der hinteren Stirnseite des Verformungselements 120a lösbar eingesteckt wird. Bereits eine geringe axiale Bewegung des Verformungselements 120a bewirkt eine radiale Aufweitung des Dichtelements 110a, so dass zwischen dem Dichtelement 110a und der Innenwandung der zu verschließenden Bohrung 210a eine Selbsthemmung eintritt, die ein Mitdrehen des Dichtelements 110a verhindert. Unter Selbsthemmung wird verstanden, dass die zwischen der Außenwandung des hülsenartigen Dichtelements 110a und der Innenwandung der Bohrung 210a wirkenden Reibkräfte stets höher sind als die zwischen den Gewinden 112a und 222a wirkenden Reibkräfte. Dies kann bspw. durch die Wahl geeigneter Materialspaarungen und/oder Oberflächenbeschaffenheiten beeinflusst werden.

Die Fig. 2 gezeigte Bohrung 210a weist beispielhaft eine gefaste Kante 215a auf, an der sich der Bohrungsdurchmesser geringfügig reduziert. Mit dieser Kante 215a kann u. a. die Einsetztiefe der Verschlusseinrichtung 100a vorgegeben bzw. begrenzt werden. Das Dichtelement 110a ist an seiner vorderen geschlossenen Stirnseite 115a mit einer umlaufenden Fase 116a ausgebildet, die beim Einsetzen des Versschlusselements 100a in die Bohrung 210a mit der gefasten Bohrungskante 215a in Anlage gelangt. Beim nachfolgenden Abdichtvorgang kommt es auch zu einer elastischen und/oder plastischen axialen Verformung des Dichtelements 110a, indem das Verformungselement 120a das Material des Dichtelements 110a (bzw. die geschlossene Stirnseite 115a) quasi vor sich her treibt und gegen die Bohrungskante 215a drückt, wobei das Verkrallen der Riffelung 113a in der Innenwandung der Bohrung 210a ein Zurückdrücken des Dichtelements 110a verhindert. Im Ergebnis führt dies dazu, dass an der Bohrungskante 215a auch eine in axialer Richtung wirkende Abdichtung erzielt wird.

Die Außenwandung des hülsenartigen Dichtelements 110a kann auch im hinteren Abschnitt (d. h. im Bereich des Innengewindes 112a) mit einer Riffelung ausgebildet sein (wie vorausgehend erläutert), die beim Eindrehen des Verformungselements 120a quasi durch dessen Außengewinde 122a radial nach außen gedrückt wird und sich mit der Innenwandung der zu verschli - den Bohrung 210a verhakt Dadurch kann ein Zurückdrücken Verdrehen des Dichtelements 110a in der Bohrung 210a dert oder zumindest erschwert werden.

Fig. zeigt eine insgesamt mit 100b bezeichnete Verschlusseinrichtung. Diese Verschlusseinrichtung 100b kann, bis auf die nachfolgend erläuterten Unterschiede, alle Merkmale der vorausgehend erläuterten Verschlusseinrichtung 100a aufweisen

Abweichend zu dem vorausgehend erläuterten ersten Ausführungsbeispiel (Verschlusseinrichtung 100a) ist das Verformungselement 120b als einzelne bzw. separierte Kugel ausgebildet. Ferner umfasst die Verschlusseinrichtung 100b ein massives, einstückiges und einteiliges Schraubelement 130b. Das Schraubelement 130b ist an einem axialen Ende bzw. an der vorderen Stirnseite mit einem kegelförmigen Kontaktabschnitt 134b für das kugelige Verformungselement 120b ausgebildet. Am anderen axialen Ende bzw. an der gegenüberliegenden hinteren Stirnseite ist das Schraubelement 130b mit einem Formschlussabschnitt 133b ausgebildet. Ferner weist das Schraubelement 130b ein Au ßengewinde 132b auf.

Die linke Darstellung zeigt das Dichtelement 110b, das Verformungselement 120b und das Schraubelement 130b im vereinzelten Zustand. Die rechte Darstellung zeigt dieselben Elemente im vormontierten Zustand, wobei das Außengewinde 132b am Schraubelement 130b und das Innengewinde 112b am hülsenartigen Dichtelement 110b ineinandergreifen. Das Verformungselement 120b befindet sich in einer Montageposition und das Schraubelement 130b befindet sich in einer Ausgangsposition. Beim Verdrehen des Schraubelements 130b bewirkt der durch die beiden ineinandergreifenden Gewinde 112b und 132b gebildete Schraubmechanismus ein Eindrehen des als Madenschraube ausgebildeten Schraubelements 130b in den Innenraum 111b des Dichtelements 110b. Hierbei schiebt das Schraubelement 130b das kugelförmige Verformungselement 120b quasi vor sich her, was die Verformung des hülsenartigen Dichtelements 110b herbeiführt. Das Verformungselement 120b gelangt schließlich in seine Verschlussposition und das Schraubelement 130b gelangt schließlich in seine Endposition, was durch den Farbring 114b angezeigt wird. Die Montage der Verschlusseinrichtung 100b erfolgt analog zu der im Zusammenhang mit Fig. 2 erläuterten Vorgehensweise. Auch im Übrigen gelten analog die vorausgehenden Erläuterungen.

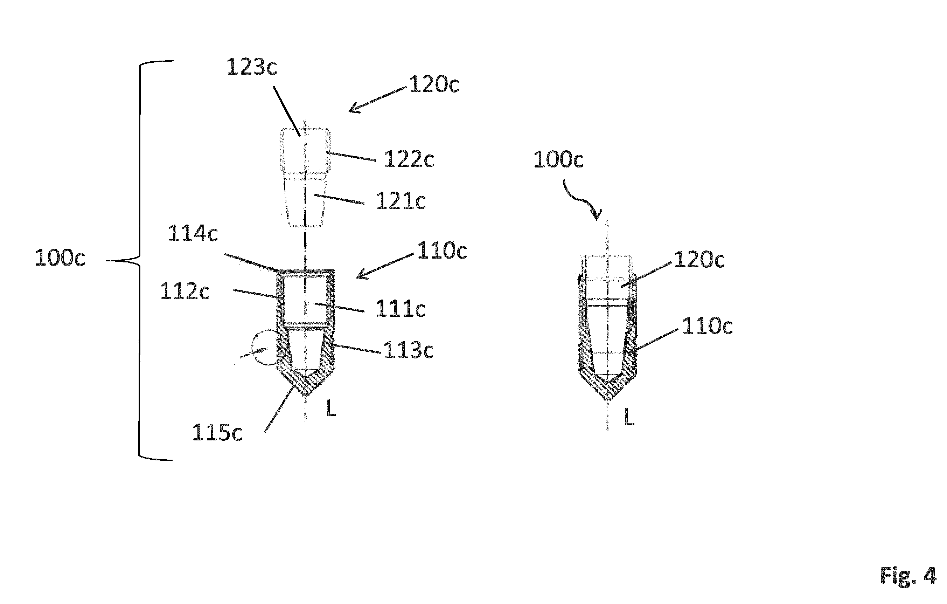

Fig. 4 zeigt eine insgesamt mit 100c bezeichnete Verschluss einrichtung. Diese Verschlusseinrichtung 100c kann, bis auf die nachfolgend erläuterten Unterschiede, alle Merkmale der vorausgehend erläuterten Verschlusseinrichtung 100a aufweisen.

Abweichend zu dem vorausgehend erläuterten ersten Ausführungsbeispiel (Verschlusseinrichtung 100a) ist der Kopf 121c des Verformungselements 120c kegelstumpfförmig ausgebildet. Korrespondierend hierzu weist der verengte Abschnitt im Innenraum 111c des hülsenartigen Dichtelements 110c eine kegelstumpfförmige bzw. konische Formgebung auf. Ferner ist die geschlossenen untere bzw. vorder Stirnseite 115c des hülsenartigen Dichtelements 110c spitz zulaufend bzw. kegelförmig ausgebildet.

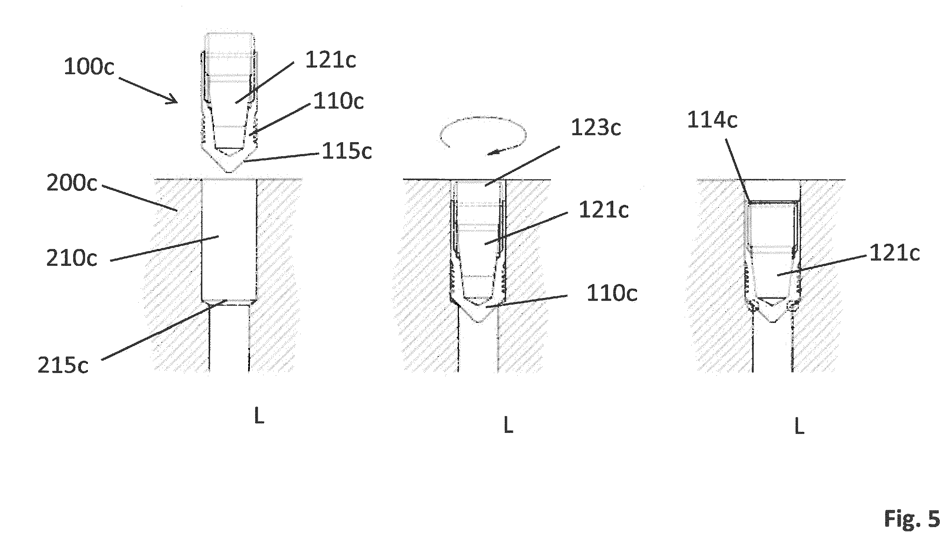

Die Verschlusseinrichtung 100c eignet sich hervorragend (jedoch nicht ausschließlich) zum Verschließen einer größeren und insbesondere gestuften Bohrung wie anhand des in Fig. 5 gezeigten Montageablaufs ersichtlich. Die Montage der Verschlusseinrichtung 100c erfolgt analog zu der im Zusammenhang mit Fig. 2 erläuterten Vorgehensweise. Beim Einsetzen der Verschlusseinrichtung 100c gelangt die kegelförmige Stirnseite 115c des Dichtelements 110c in Kontakt der gefasten Boh rungskante 215c. Beim Nachfolgenden Abdichten, was durch Ein drehen des einstückigen und einteiligen Verformungselements 220c in das Dichtelement 210c erfolgt, wird das Dichtelement 210c sowohl in radialer Richtung als auch in axialer Richtung (L) verformt Durch die radiale Aufweitung wird eine radiale Abdichtung erzielt. Durch die elastischen und/oder plastische Verformung in axialer Richtung wird die vordere Stirnseite 115c gegen die Bohrungskante 215c gepresst, wodurch an der Bohrungskante 215c in vorteilhafter Weise auch eine axiale Abdichtung erzielt wird, unabhängig von einem etwaigen Fasenwinkel an der Bohrungskante 215c. Bevorzugt ist jedoch vorgesehen, dass der Neigungswinkel der kegelförmigen Stirnseite 115c am hülsenartigen Dichtelement 210c vom Fasenwinkel an der Bohrungskante 215c abweicht. Die axiale Verformung wird möglich, da zu diesem Zeitpunkt noch keine reibschlüssig Verspannung mit der Innenwandung der Bohrung 210c gegeben ist

Durch die doppelwirkende Abdichtung können sehr hohe Drücke abgedichtet werden. Ferner werden zuverlässig Kriechspalte vermieden, die schwer zu reinigen sind (dies ist bspw. relevant in der Lebensmittelindustrie). Ferner wird durch die quasi redundante doppelte Abdichtung eine sehr zuverlässige Abdichtung erzielt, so dass selbst dann noch eine ausreichende Abdichtung gegeben ist, wenn eine der beiden Abdichtungen nicht optimal ausgeführt und/oder in sonstiger Weise schadhaft ist.

Die axiale Verformung wird durch den kegelstumpfförmigen Kopf 121c des Verformungselements 120c begünstigt, dessen Bewegungskraft sich in eine radiale Komponente und in eine axiale Komponente aufteilt. Ferner wirkt der kegelstumpfförmige Kopf 121c auch noch in der Verschlussposition wie ein Dehnkeil, der die Wandung des Dichtelements 110c in radialer Richtung gegen die Innenwandung der Bohrung 210c und in axialer Richtung ge gen die Bohrungskante 15c drückt und somit dauerhaft vorgespannt hält. Die Abdichtungswirkung kann über die axiale Länge des kegelstumpfförmigen Kopfs 121c beeinflusst werden, wobei verhältnismäßig große axiale Längen zu bevorzugen sind. - rigen gelten analog die vorausgehenden Erläuterungen.

Bei den vorausgehend erläuterten Ausführungsbeispielen erfolgt die Abdichtung der abzudichtenden Bohrung durch Verformung des hülsenartigen Dichtelements, das sich infolge dieser Verformung dichtend an die Innenwandung der betreffenden Bohrung und/oder gegen eine in der Bohrung ausgebildete Bohrungskante anlegt, wobei je nach dem eine radiale Abdichtung und/oder eine axiale Abdichtung erzielt wird. Die Bohrung selbst kann hierbei elastisch und/oder plastisch verformt werden (dies hängt in erster Linie von der Festigkeit und/oder Härte des Wandungsmaterials ab), wodurch ein Formschluss zwischen dem hülsenartigen Dichtelement und der Bohrung bzw. deren Innenwandung herbeigeführt wird

Das hülsenartige Dichtelement kann sich ja nach Ausgestaltung elastisch oder plastisch verformen, wobei eine plastische Ver formung in der Regel elastische Anteile enthält. Eine rein e lastische Verformung hat den Vorteil, dass diese durch herausdrehen des Verformungselements bzw. des Schraubelements vollständig reversibel ist, so dass die Verschlusseinrichtung aus der Bohrung entnommen werden kann (d. h. die verschlossene Bohrung kann mit wenig Aufwand wieder frei gegeben werden) und auf diese Weise mehrfach verwendbar ist. D. h. die Verschlusseinrichtung ist in diesem Fall kein Wegwerfteil, sondern ist mehrfach verwendbar.

Ist eine plastische Verformung des hülsenartigen Dichtelements beabsichtigt, so ist bevorzugt vorgesehen, dass dieses aus einem Metallmaterial besteht. Das Metallmaterial kann vollständig oder auch nur abschnittsweise bzw bereichsweise gehärtet sein, bspw. im Bereich einer eingeformten Riffelung die sich hierdurch besser in die Innenwandung der Bohrung eindrücken kann. Als Metallmaterialien kommen z. B. Edelstähle (insbesondere nicht rostende Stähle), Werkzeugstähle, Federstähle, Einsatzstähle oder vergütete Baustähle in Betracht. Ferner kann das hülsenartige Dichtelement in diesem Fall aber auch aus einem Kunststoffmaterial oder einem Verbundmaterial bestehen.

Ist eine elastische Verformung des hülsenartigen Dichtelements beabsichtigt, so ist bevorzugt vorgesehen, dass dieses aus einem Kunststoffmaterial oder einem Verbundmaterial oder sogar aus einem Gummimaterial besteht. Das Verformungselement kann in diesem Fall aus einem Metallmaterial oder auch aus einem Kunststoffmaterial bestehen. Ferner kann das hülsenartige Dichtelement in diesem Fall aber auch aus einem Metallmaterial bestehen

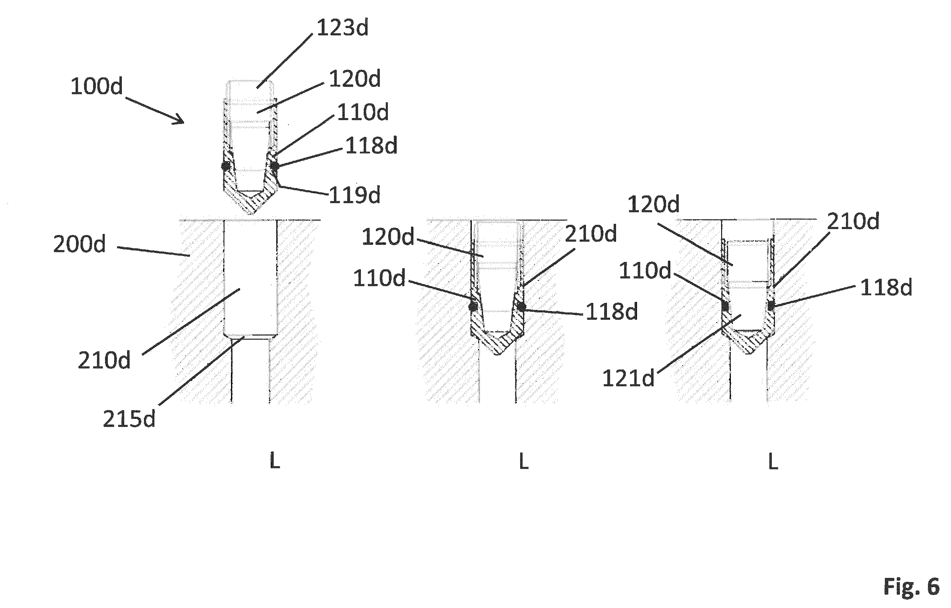

Um die Abdichtung zwischen dem hülsenartigen Dichtelement und der Bohrung zu verbessern, was bspw. dann von Vorteil ist, wenn das hülsenartige Dichtelement nur elastisch verformt werden soll, kann das hülsenartige Dichtelement mit wenigstens einem separaten Dichtkörper ausgebildet sein, wie nachfolgend anhand Fig. 6 näher erläutert

Fig. 6 zeigt eine insgesamt mit 100d bezeichnete Verschlusseinrichtung. Diese Verschlusseinrichtung 100d kann, bis auf die nachfolgend erläuterten Unterschiede, alle Merkmale der vorausgehend erläuterten Verschlusseinrichtungen aufweisen.

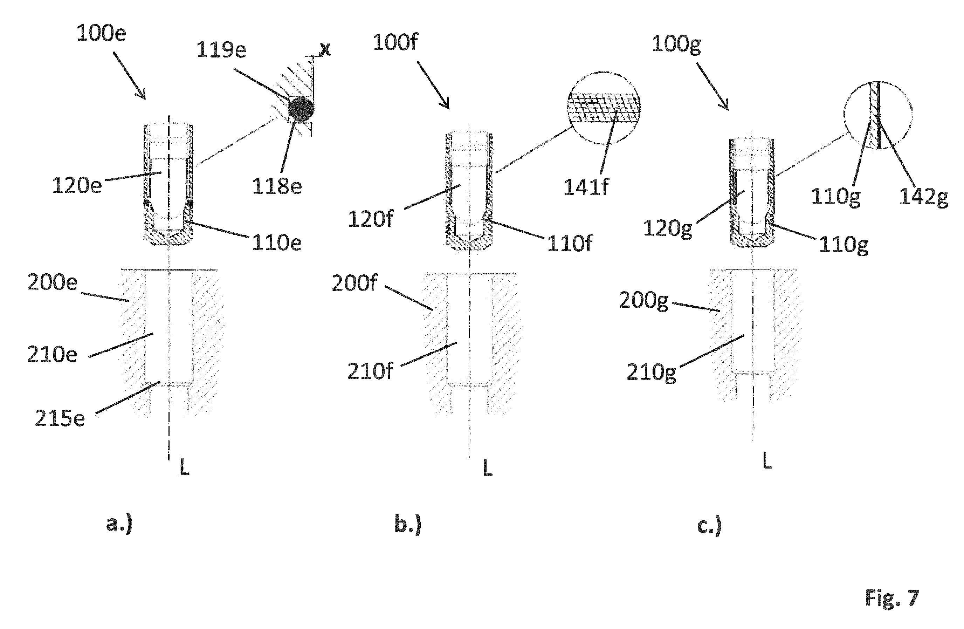

Das senartige Dichtelement 110d weist eine als O-Ring ausbildete separate Dichtung 118d auf, die in einer korrespondierenden 9d Außenumfang des hülsenartigen Dichtelements 110d angeordnet ist. Be Eindrehen des Verformungselements 120d (das beispielhaft mit einem kegelstumpfförmigen Kopf aus gebildet ist; siehe auch Fig. 7a) wird die Dichtung 118d elastisch oder gegebenenfalls auch plastisch verformt und legt sich hierbei dichtend an die Innenwandung der Bohrung 210d an. Gegebenfalls kann eine Abdichtung der Bohrung 210d nur über die Dichtung 118d erfolgen.

In dem in Fig. 6 gezeigten Ausführungsbeispiel ist die Dichtung 118d als O-Ring mit Kreisquerschnitt ausgebildet. Die Dichtung 118d kann jedoch auch eine andere Gestalt aufweisen (bspw. O-Ring mit viereckigem Querschnitt) oder B auch als Dichtlippe oder dergleichen ausgebildet sein. Selbiges gilt für die Nut 119d, wobei auch andere Befestigungsmöglichkeiten als eine Nut vorgesehen sein können. Ferner können an einem hülsenartigen Dichtelement mehrere Dichtungen angeordnet sein, die insbesondere axial beabstandet sind und die identisch oder unterschiedlich ausgebildet sein können. Auch eine einstückige Ausbildung des hülsenartigen Dichtelements mit wenigstens einer daran angeformten Dichtung ist denkbar. Bevorzugt ist die Dichtung 118d vormontiert

Die Dichtung 118d kann aus einem elastischen Material, wie bspw. einem Gummimaterial, gebildet sein. Ferner ist denkbar, dass die Dichtung 118d aus einem sich plastisch verformenden Material, wie bspw. einem Kunststoffmaterial oder einem weichen Metallmaterial, gebildet ist. Ebenso ist denkbar, dass die Dichtung 118d aus einem harten und sich im Wesentlichen nicht verformenden Material gebildet ist dass sich in die Innenwandung der Bohrung 210d eindrückt und somit eine formschlüssige Abdichtung herbeiführt

Bevorzugt ist vorgesehen, dass die Dichtung 118d in radialer Richtung von dem noch nicht in die Bohrung 210d eingesetzten hülsenartigen Dichtelement 110d übersteht. Die Dichtung 118d kann somit auch dazu verwendet werden, dass die Verschlusseinrichtung 100d nach dem Einsetzen in die Bohrung 210d durch e lastische Rückstellkräfte und/oder Reibkräfte zwischen der Dichtung 118d und der Innenwandung der Bohrung 210d festgehalten wird. Dadurch kann die Montage vereinfacht werden (bspw. bei einer Überkopfmontage). Ferner kann ein Mitdrehen des hülsenartigen Dichtelements 110d beim Eindrehen des Verformungselements 120d verhindert oder zumindest erschwert werden. Der radiale Überstand bezüglich dem Außenumfang bzw. der Außenumfangsfläche ist an dem in Fig. 7a gezeigten Ausführungsbei spiel einer Verschlusseinrichtung 100e veranschaulicht und mit x bezeichnet.

Die Fig. 7b und 7c zeigen zwei weitere Möglichkeiten, die in die zu verschließende Bohrung eingesetzte Verschlusseinrichtung festzuhalten und/oder um ein Mitdrehen des hülsenartigen Dichtelements beim Eindrehen des Verformungselements zu verhindern oder zumindest zu erschweren. Die in Fig. 7 dargestellten Maßnahmen sind auch miteinander kombinierbar.

Bei der in Fig. 7b gezeigten Verschlusseinrichtung 10 f ist das hülsenartige Dichtelement 110f an seiner Außenumfangsfläche zumindest bereichsweise bzw. abschnittsweise mit einem Rauabschnitt 141f versehen, der als Friktionsfläche fungieren kann. Der Rauabschnitt 141f ist beispielhaft als Riffelung bzw. Rändelung (oder dergleichen) ausgebildet, was aus der vergrößerten Detaildarstellung ersichtlich ist. Die Riffelung bzw. Rändelung 141f ist beispielhaft direkt im Material des hülsenartigen Dichtelements 110f eingebracht

Bei der in Fig. 7c gezeigten Verschlusseinrichtung 100g ist das hülsenartigen Dichtelement 110g an seiner Außenumfangsfläche zumindest bereichsweise bzw. abschnittsweise mit einer Reibbeschichtung 142g versehen, die ebenfalls als Friktions fläche fungieren kann. Die Reibbeschichtung 142g ist beispiel haft als Kunststoff- und insbesondere als Gummiüberzug bzw. - beschichtung ausgebildet, was aus der vergrößerten Detaildarstellung ersichtlich ist.

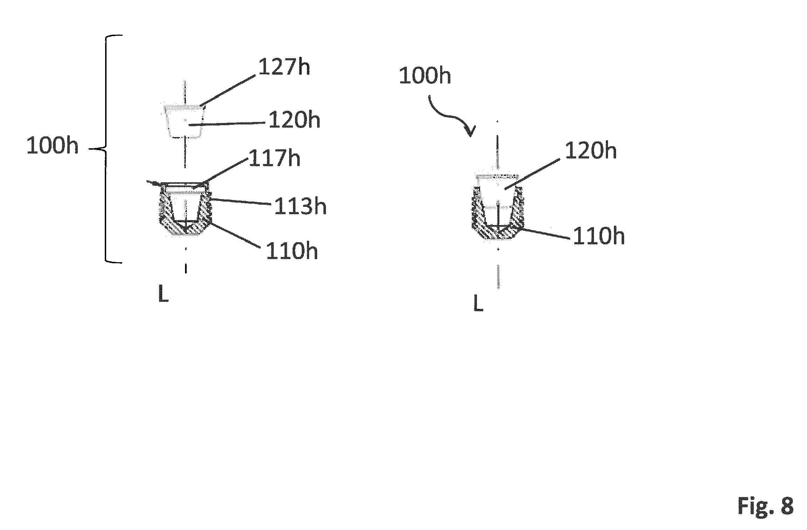

Fig. 8 zeigt eine insgesamt mit 100h bezeichnete Verschlusseinrichtung. Diese Verschlusseinrichtung 100h kann, bis auf die nachfolgend erläuterten Unterschiede, alle Merkmale der vorausgehend erläuterten Verschlusseinrichtung 100a aufweisen.

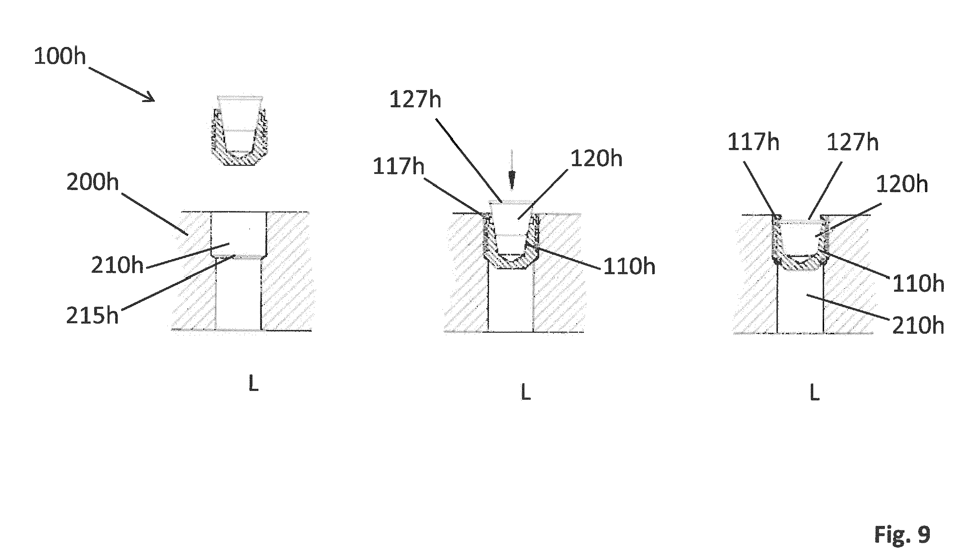

Abweichend zu dem vorausgehend erläuterten ersten Ausführungs beispiel (Verschlusseinrichtung 100a) weist die Verschlussein richtung 100h keinen Dreh-Stell-Mechanismus bzw. keinen Schraubmechanismus auf. Zum Abdichten wird das kegelstumpfförmige Verformungselement 120h in das hülsenartige Dichtelement 110h eingeschlagen oder eingepresst, wie in Fig. 9 gezeigt

Trotz des verhältnismäßig kompakten Aufbaus wird sowohl eine radiale Abdichtung als auch eine axiale Abdichtung an der gefasten Bohrungskante 215h erzielt, wozu auf die diesbezüglichen vorausgehenden Erläuterungen verwiesen wird. Mit 127h ist eine am Verformungselement 120h ausgebildete Rastwulst bezeichnet, die in eine korrespondiere Rastnut 117h an der Innenwandung des hülsenartigen Dichtelements 110h einrasten kann, wenn das Verformungselement 120h seine Verschlussposition erreicht hat (siehe rechte Darstellung in Fig. 9). Die Rastnut 117h kann mit einer Farbe oder dergleichen gefüllt sein, die beim Einrasten der Rastwulst 127h sichtbar und/oder tastbar nach außen gedrückt wird.

### Bezugszeichenliste

- 100: Verschlusseinrichtung
- 110: hülsenartiges Dichtelement
- 111: Innenraum, Innenbohrung
- 112: Innengewinde
- 113: Riffelung
- 114: Farbring, Markierung
- 115: Stirnseite, Boden
- 116: Fase
- 117: Rastnut
- 118: Dichtung
- 119: Nut
- 120: Verformungselement
- 121: Kopf
- 122: Außengewinde
- 123: Formschlussabschnitt
- 127: Rastwulst
- 130: Schraubelement
- 132: Außengewinde
- 133: Formschlussabschnitt
- 134: Kontaktabschnitt
- 141: Rauabschnitt
- 142: Reibbeschichtung
- L: Längsachse, Drehachse
- x: Überstand

## Patentansprüche

1. Verschlusseinrichtung (100) zum Verschließen einer hydrau lischen und/oder pneumatischen Bohrung (210), mit einem hülsenartigen Dichtelement (110), das in die zu verschließende Bohrung (210) eingesetzt wird und das sich durch Verformung dichtend an die Innenwandung der Bohrung 210) anlegt, und mit einem Verformungselement (120), das längsbeweglich im Innenraum (111) des Dichtelements (110) angeordnet ist und das aus wenigstens einer Montageposition in wenigstens eine Verschlussposition bewegbar ist und hierbei die Verformung des Dichtelements (110) herbeiführt, **dadurch gekennzeichnet, dass** die Verschlusseinrichtung (100) ferner einen Dreh-Stell-Mechanismus umfasst, mit dem eine extern aufgebrachte Drehbewegung in eine Längsbewegung des Verformungselements (120) umsetzbar ist, um dieses aus der Montageposition in die Verschlussposition zu bewegen.

2. . Verschlusseinrichtung (100) nach Anspruch 1
**dadurch gekennzeichnet, dass**
der Dreh-Stell-Mechanismus ein Schraubmechanismus ist, der zwei ineinandergreifende Gewindeabschnitte (112, 222 bzw. 112, 132) umfasst und vorzugsweise einer der Gewindeabschnitte (112) ein am Dichtelement angeordnetes Innengewinde ist.

3. Verschlusseinrichtung (100) nach Anspruch 2,
**dadurch gekennzeichnet, dass**
der andere Gewindeabschnitt (122) ein am Verformungselement 12 angeordnetes Außengewinde ist

4. . Verschlusseinrichtung (00) nach Anspruch 3,
**dadurch gekennzeichnet, dass**
das Verformungselement 12 einen Formschlussabschnitt (123) zum Aufbringen der Drehbewegung aufweist und vorzugsweise das Verformungselement (120) als massiver Körper ausgebildet ist, der an einem axialen Ende mit einem Kopf (121) und am anderen axialen Ende mit dem Formschlussabschnitt (123) ausgebildet ist, wobei es vorzugsweise so ist, dass der Kopf (121) kugelförmig, paraboloidförmig oder kegelstumpfförmig ausgebildet ist

5. Verschlusseinrichtung nach Anspruch 4,
**dadurch gekennzeichnet, dass**
diese ferner ein Schraubelement (13 0) zum Bewegen des Verformungselements (120) aufweist, wobei der andere Gewinde abschnitt (132) ein an diesem Schraubelement (130) angeordnetes Außengewinde ist, wobei das Schraubelement (130) vorzugsweise einen Formschlussabschnitt (133) zum Aufbringen der Drehbewegung aufweist.

6. . Verschlusseinrichtung (100) nach Anspruch 5,
**dadurch gekennzeichnet, dass**
das Schraubelement (130) als massiver Körper ausgebildet ist, der an einem axialen Ende mit einem Kontaktabschnitt (134) für das Verformungselement (120) und am anderen axialen Ende mit dem Formschlussabschnitt 133 ausgebildet ist, wobei das Schraubelement 13 vorzugsweise als Madenschraube ausgebildet ist

7. . Verschlusseinrichtung (100) nach einem der vorausgehenden Ansprüche 2 bis 6,
**dadurch gekennzeichnet, dass**
das Verformungselement (120) kugelförmig, paraboloidförmig oder kegelstumpfförmig ausgebildet ist.

8. . Verschlusseinrichtung (100) nach einem der vorausgehenden Ansprüche,
**dadurch gekennzeichnet, dass**
das Dichtelement (110) aus einem Kunststoffmaterial gebildet ist

9. Verschlusseinrichtung 1 nach einem der vorausgehenden Ansprüche und insbesondere nach Anspruch 8,
**dadurch gekennzeichnet, dass**
das Dichtelement (110) ergänzend mit einer Dichtung (118) ausgebildet ist, wobei diese Dichtung (118) insbesondere in einer Nut (119) am Außenumfang des Dichtelements (110) einsitzt

10. . Verschlusseinrichtung (100) nach einem der vorausgehenden Ansprüche,
**dadurch gekennzeichnet, dass**
das Dichtelement (110) und insbesondere auch das Verformungselement (120) aus einem Metallmaterial gebildet ist/sind

11. . Verschlusseinrichtung (100) nach einem der vorausgehenden Ansprüche,
**dadurch gekennzeichnet, dass**
das diese wenigstens eine Kontrolleinrichtung (114) auf weist, die anzeigt, ob sich das Verformungselement 12 in einer Verschlussposition und/oder das Schraubelement (130) in einer Endposition befindet, wobei es vorzugsweise so ist, dass das Dichtelement (110) an seiner Außenfläche zumindest abschnittsweise eine Riffelung (113) aufweist und/oder es vorzugsweise so ist, dass das Dichtelement (110) an seinem Außenumfang wenigstens einen Rauabschnitt und/oder Reibabschnitt aufweist, um bei der Montage ein Mitdrehen des Dichtelements (110) innerhalb der zu verschließenden Bohrung (210) zu verhindern.

12. Verschlusseinrichtung (100) nach einem der vorausgehenden Ansprüche,
**dadurch gekennzeichnet, dass**
das Dichtelement (110) dafür ausgebildet ist, in eine gerade Bohrung eingesetzt zu werden und diese Bohrung in radialer Richtung abzudichten, wobei die Verschlusseinrichtung vorzugsweise so gestaltet ist, dass das Dichtelement (110) dafür ausgebildet ist, in eine gestufte Bohrung (210) eingesetzt zu werden und diese Bohrung in radialer Richtung und/oder in axialer Richtung (L) abzudichten.

13. . Verschlusseinrichtung (100) nach einem der vorhergehenden Ansprüche, **dadurch gekennzeichnet, dass**
die vordere geschlossene Stirnseite (115) des Dichtelements 11 konisch oder mit einer Fase (116) ausgebildet ist, die dafür vorgesehen ist, in axialer Richtung (L) gegen die Bohrungsstufe (215) abzudichten.

14. Bausatz für eine Verschlusseinrichtung (100) gemäß einem der vorausgehenden Ansprüche, wenigstens umfassend ein Dichtelement (110) und ein Verformungselement (120) nach den Merkmalen in wenigstens einem der vorausgehenden Ansprüche.

15. . Verwendung einer Verschlusseinrichtung (100) gemäß einem der vorausgehenden Ansprüche zum Verschließen einer hydraulischen und/oder pneumatischen Bohrung (210), wobei der Dreh-Stell-Mechanismus dieser Verschlusseinrichtung 10 drehwinkelgesteuert und/oder drehnomentgesteuert betätigt wird.

16. . Druckdichter Verschluss bestehend aus einem Werkstück (200) mit einer abzudichtenden Bohrung (210) und einer Verschlusseinrichtung (100) nach einem der Ansprüche 1 bis 21, wobei der Außendurchmesser des Dichtelements (110) der Verschlusseinrichtung schon vor dem Eindrehen des Verformungselements 12 gegenüber der aufnehmenden Bohrung (210) des Werkstücks (200) so viel Übermaß aufweist, dass das Dichtelement (110) zwar durch eine vorzugsweise gradlinige Bewegung in diese Bohrung (210) eingesetzt werden kann, dort aber so stark reibschlüssig gehalten wird, dass das wirksame Reibmoment, welches beim Eindrehen des Verformungselements (12 0) in den korrespondierenden Gewinden (112, 122) auftritt, von Beginn an stets kleiner ist, als das maximale Haftreibmoment zwischen dem Dichtelement (110) und der Innenwandung der Bohrung (210), wobei es vorzugsweise so ist, dass die Wandstärke des Dichtelements (110) so ausgelegt ist, dass das Dichtelement (110) beim Eindrehen des Verformungselements (120) derart in Richtung der Längsachse (L) der zu verschließenden Bohrung (210) verlängert wird, dass das Dichtelement (110) in Richtung der Längsachse gegen eine Stufe (215) der abzudichtenden Bohrung (210) gepresst wird und/oder das Dichtelement (110) idealerweise mindestens eine Einrichtung (113), wie etwa eine umlaufende Schneide oder Spitze aufweist, die die mit ihm in Kontakt tretende Innenwandung der zu verschließenden Bohrung (210), insbesondere durch Eindringen, lokal verstärkt verformt, wobei diese Verformung der Innenwandung elastisch und vorzugsweise plastisch ist
